# EUROPÄISCHE PATENTSCHRIFT

(11) **EP 1 010 602 B1**
(45) Veröffentlichungstag und Bekanntmachung des Hinweises auf die Patenterteilung: **25.02.2004**
(21) Anmeldenummer: 99124275.1
(22) Anmeldetag: 04.12.1999
(51) Int. Cl.: B61L 15/00, H04L 12/66, B60L 15/42

(54) **Datenkommunikationssystem**
Data communication system
Système de communication de données

(30) Priorität: 08.12.1998 DE 19856540
(43) Veröffentlichungstag der Anmeldung: 21.06.2000
(73) Patentinhaber: DB Cargo AG, 55116 Mainz (DE)
(72) Erfinder: Gralla, Dietmar, Dr., 32425 Minden (Westf) (DE); Witte, Stefan, Dr., 32425 Minden (Westf) (DE); Heinz, Sebastian, 32427 Minden (Westf) (DE)
(74) Vertreter: Zinken-Sommer, Rainer

(56) Entgegenhaltungen:
- EP-A- 0 300 350
- WO-A-98/43392
- US-A- 5 289 176
- PATENT ABSTRACTS OF JAPAN vol. 018, no. 148 (E-1522), 11. März 1994 (1994-03-11) & JP 05 327735 A (TOSHIBA CORP), 10. Dezember 1993 (1993-12-10)

## Beschreibung

Die Erfindung betrifft ein Datenkommunikationssystem im Zug, mit einem Zugbus zur Kommunikation zwischen Fahrzeugen des Zuges und jedem Fahrzeug zugeordneten internen Fahrzeugbussystemen, die über jeweils einen Gateway an den Zugbus angekoppelt sind, mit den im Oberbegriff des Anspruchs 1 genannten Merkmalen.

Datenkommunikationssysteme der gattungsgemäßen Art sind z.B. aus der U.S.-Patentschrift 5,289,476 bekannt. Bei diesen erfolgt eine Datenkommunikation einerseits über einen Zugbus zwischen den Fahrzeugen des Zuges. Andererseits erfolgt eine Datenkommunikation innerhalb eines Fahrzeuges über einen Fahrzeugbus. Zur Datenkommunikation zwischen Systemkomponenten der Fahrzeuge sind die jeweiligen Fahrzeugbussysteme über Gateways mit dem Zugbus verbunden.

Voraussetzung für eine Datenkommunikation zwischen den einzelnen Fahrzeugen innerhalb des Zuges ist eine Initialisierung des Datenkommunikationssystems. Hierbei werden den einzelnen Gateways (Fahrzeugen) durch eine sogenannte Zugtaufe eindeutige feste Adressierungen zugeordnet. Diese Adressierung ist zwingende Voraussetzung für eine fahrzeugindividuelle Datenkommunikation innerhalb des Zuges.

Um diese Initialisierung und eine spätere Steuerung der Datenkommunikation durchführen zu können, ist es erforderlich, einem Fahrzeug des Zuges - in der Regel einem Triebfahrzeug - eine Master-Funktion zuzuordnen. Alle weiteren Fahrzeuge des Zuges erhalten eine Slave-Funktion. Master-Funktionen werden hierbei von Systemkomponenten des Zuges übernommen, die aus Vorgaben eines Triebfahrzeugführers, eines automatischen Steuerungssystems oder dergleichen Befehle für einzelne Subsysteme des Zuges, wie beispielsweise Antrieb, verteilter Antrieb, Bremse oder dergleichen, generieren. Slave-Funktionen werden von den Systemkomponenten des Zuges übernommen, die diese Befehle umsetzen.

Da nicht alle Fahrzeuge eines Zuges Master-Funktionen übernehmen können, werden innerhalb eines Zuges Fahrzeuge unterschieden, die ausschließlich Slave-Funktionen oder Master-Funktionen und Slave-Funktionen übernehmen können. Bei Fahrzeugen, die ausschließlich Slave-Funktionen übernehmen können, sind die Slave-Systemkomponenten über einen Slave-Fahrzeugbus über ein Slave-Gateway mit dem Zugbus verbunden.

Bei Fahrzeugen, die sowohl Master-Funktionen als auch Slave-Funktionen übernehmen können, sind die Systemkomponenten, die Master-Funktionen übernehmen können, über einen ersten Fahrzeugbus, einen Master-Fahrzeugbus, über ein Master-Gateway mit dem Zugbus verbunden, während Systemkomponenten, die Slave-Funktionen übernehmen, über einen zweiten Fahrzeugbus, einen Slave-Fahrzeugbus, über ein Slave-Gateway mit dem Zugbus verbunden sind.

Besitzt ein Zug mehrere masterfähige Fahrzeuge, beispielsweise zwei Triebfahrzeuge, Steuerwagen oder dergleichen, muß sichergestellt sein, daß nur eines der masterfähigen Fahrzeuge tatsächlich die Master-Funktion übernimmt - das heißt aktiv ist -, da ansonsten eine sichere Steuerung über den Zugbus nicht gewährleistet werden kann. Bei den bekannten Datenkommunikationssystemen erfolgt die Festlegung des aktiven Mastersystems mit der Initialisierung, also mit der Zugtaufe. Hierbei befindet sich das aktive Mastersystem immer auf dem Fahrzeug, von dem aus die Initialisierung des Datenkommunikationssystems veranlaßt wurde. Während einer Zugfahrt erfolgt dann eine Datenkommunikation zwischen dem aktiven Mastersystem und den Slave-Fahrzeugsystemen über den einen aktiven Master-Fahrzeugbus, den Zugbus und den Slave-Fahrzeugbussen sowie über die Gateways, über die die Fahrzeugbusse an dem Zugbus angekoppelt sind.

Bei dem bekannten Datenkommunikationssystem ist nachteilig, daß für den Fall, daß ein weiteres im Zug vorhandenes masterfähiges Fahrzeug, beispielsweise ein weiteres Triebfahrzeug oder Steuerwagen, die Master-Funktionen übernehmen soll, eine Neuinitialisierung des Datenkommunikationssystems notwendig ist.

Dies ist erforderlich, da die Systemkomponenten, die jetzt die Master-Funktion übernehmen sollen, keine Information über eine Zugzusammensetzung und den Status des Zuges, insbesondere Adressen der einzelnen Teilnehmer, besitzen.

Der Erfindung liegt die Aufgabe zugrunde, ein Datenkommunikationssystem der gattungsgemäßen Art zu schaffen, bei dem in einfacher Weise ein Wechsel der Masterfunktionen zwischen wenigstens zwei masterfähigen Fahrzeugbussen innerhalb eines Zugverbundes möglich ist.

Erfindungsgemäß wird diese Aufgabe durch ein Datenkommunikationssystem mit den im Anspruch 1 genannten Merkmalen gelöst. Dadurch, daß bei der Initialisierung des Datenkommunikationssystems alle Master-Gateways der an den Zugbus angekoppelten Master-Fahrzeugbussysteme zwei unterschiedliche Betriebszustände annehmen können, wobei genau ein Master-Gateway eines Master-Fahrzeugbussystems, von dem die Initialisierung des Datenkommunikationssystems ausgelöst ist, einen Betriebszustand "AKTIV" annimmt und alle weiteren Master-Gateways der weiteren Master-Fahrzeugbussysteme einen Betriebszustand "PASSIV" annehmen, ist in einfacher Weise möglich, über die passiv geschalteten Master-Gateways die während der Initialisierung des Datenkommunikationssystems übertragenen Informationen über die Zugzusammensetzung und den Status des Zuges auch an die, an das passive Master-Gateways über einen Master-Fahrzeugbus angeschlossenen masterfähigen Systemkomponenten zu übertragen. Die Passivschaltung des Master-Gateways bewirkt, daß eine Datenübertragung lediglich unidirektional, das heißt über den Zugbus und das passiv geschaltete Master-Gateway, zu den Systemkomponenten erfolgen kann. Lediglich über das Master-Gateway des Master-Fahrzeugbussystems, der aktiv geschaltet ist, ist eine bidirektionale Datenkommunikation möglich, da sowohl die Initialisierungsinformationen empfangen werden und Befehlssignale sendbar sind. Hierdurch wird in vorteilhafter Weise erreicht, daß bei einem Wechsel des Mastersystems keine Neuinitialisierung des Datenkommunikationssystems erfolgen muß, da über die jeweils passiv geschalteten Master-Gateways alle notwendigen Zuginformationen bereits bei allen möglichen Mastersystemen vorhanden sind. Es muß lediglich sichergestellt werden, daß bei Wechsel des Mastersystems für den dann aktuellen Master-Fahrzeugbus das zugehörige Master-Gateway auf "AKTIV" geschaltet wird und das bisher aktiv geschaltete Master-Gateway den Betriebszustand "PASSIV" annimmt. Somit wird erreicht, daß, egal welches Mastersystem aktiv ist, nur dieses Befehle über den Zugbus an die Slave-Systemkomponenten senden kann.

In bevorzugter Ausgestaltung der Erfindung ist vorgesehen, daß die Master-Gateways eine Schaltungsanordnung besitzen, mittels der Signale generierbar sind, die eine Umschaltung der Betriebszustände "AKTIV" oder "PASSIV" auslösen, wobei vorzugsweise die Schaltungsanordnung logische UND-Glieder aufweist, an deren Ausgängen zum einen das Signal zur Umschaltung in den Betriebszustand "AKTIV" und zum anderen das Signal zur Umschaltung in den Betriebszustand "PASSIV" anliegt. Durch eine derartige Schaltungsanordnung ist es möglich, sämtliche Master-Gateways eines Zuges so anzusteuern, daß lediglich ein Master-Gateway den Betriebszustand "AKTIV" annehmen kann, während alle weiteren Master-Gateways des Zuges den Betriebszustand "PASSIV" besitzen. Die logische Verknüpfung der Eingangssignale der UND-Glieder stellt darüber hinaus sicher, daß tatsächlich eine gewollte Übernahme einer Masterfunktion durch einen an ein Master-Gateway angeschlossenen Master-Fahrzeugbus erfolgen soll. Die sich ergebende Abhängigkeit der Signale voneinander führt zu einer hohen Betriebssicherheit des erfindungsgemäßen Datenkommunikationssystems.

In weiterer bevorzugter Ausgestaltung der Erfindung ist vorgesehen, daß alle Master-Gateways des Zuges eine gleiche feste Adresse besitzen. Hierdurch wird sichergestellt, daß während der Initialisierung des Datenkommunikationssystems ausgetauschte Informationen von allen Master-Gateways des Datenkommunikationssystems, also auch von den sich im Betriebszustand "PASSIV" befindenden Master-Gateways, unidirektional vom Zugbus an den angeschlossenen Master-Fahrzeugbus durchgelassen werden. Somit besitzen alle masterfähigen Systemkomponenten des Zuges, auch wenn diese die Masterfunktion gerade nicht ausüben, alle notwendigen Informationen über die Zusammensetzung und den Status des Zuges.

Ferner ist in bevorzugter Ausgestaltung der Erfindung vorgesehen, daß das Signal, das die Umschaltung des Master-Gateways in den Betriebszustand "AKTIV" auslöst, über ein Zeitglied geführt ist. Hierdurch kann entsprechend einer vorgebbaren Zeitspanne erreicht werden, daß eine Übergabe der Masterfunktion innerhalb des Zuges nur innerhalb der vorgegebenen Zeitspanne möglich ist. Hierdurch kann sichergestellt werden, daß eine Masterübergabe ohne Neuinitialisierung des Datenkommunikationssystems nach Ablauf der vorgegebenen Zeitspanne nicht erfolgen kann. Die Zeitspanne wird vorzugsweise so gewählt, daß eine Änderung von Konfiguration oder Status des Zuges innerhalb dieser Zeitspanne nicht wahrscheinlich ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: schematisch eine Konfiguration eines Zuges mit zwei masterfähigen Fahrzeugen und einem nichtmasterfähigen Fahrzeug;
- Figur 2: schematisch eine Konfiguration eines Zuges mit einem masterfähigen Fahrzeug, das zwei Master-Fahrzeugbusse aufweist;
- Figur 3: schematisch verschiedene Betriebszustände eines Master-Gateways und
- Figur 4: ein Blockschaltbild zur Aktivierung eines Master-Gateways.

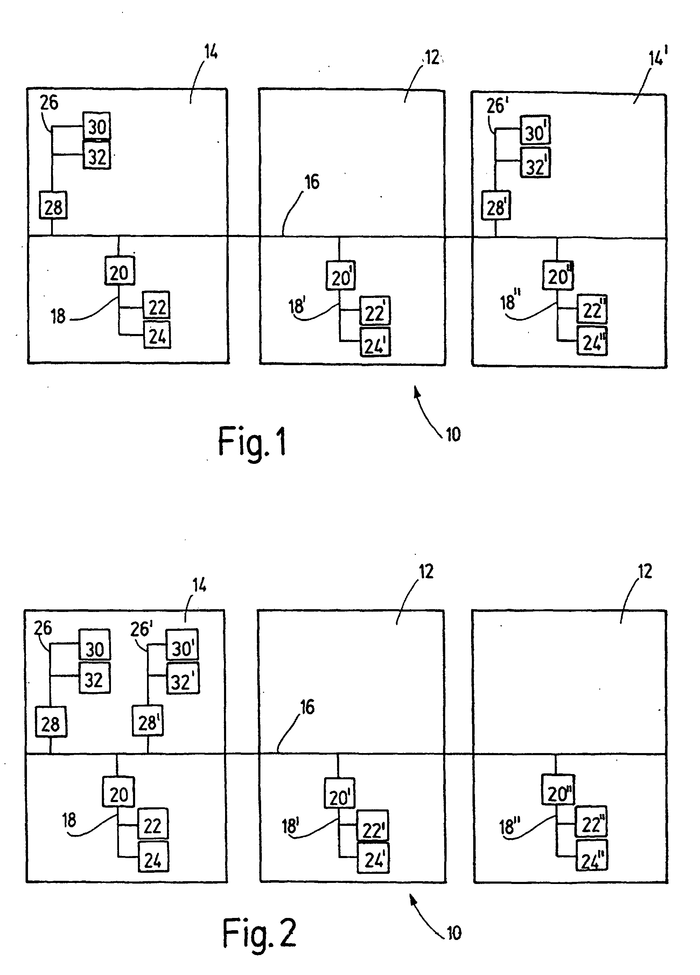

Figur 1 zeigt schematisch einen Zug 10. Der Zug 10 umfaßt einen Wagen 12 sowie zwei Triebfahrzeuge 14 beziehungsweise 14'. Es ist selbstverständlich, daß die dargestellte Konfiguration des Zuges 10 lediglich beispielhaft ist. So können nach weiteren Ausführungsbeispielen innerhalb des Zuges 10 eine Vielzahl von Wagen 12 (nachfolgend Fahrzeug 12) beziehungsweise mehr als zwei Triebfahrzeuge 14 vorgesehen sein. Für die Erfindung wichtig ist, daß der Zug 10 wenigstens zwei masterfähige Systeme, hier in den Triebfahrzeugen 14, 14', umfaßt.

Die Fahrzeuge 12, 14, 14' des Zuges 10 sind über einen Zugbus 16 miteinander verbunden. Der Zugbus 16 kann beispielsweise ein CAN-Bus, ein Funkbus oder dergleichen sein. Die Fahrzeuge 12, 14, 14' besitzen jeweils einen fahrzeuginternen Slave-Fahrzeugbus 18, 18' beziehungsweise 18''. Die Slave-Fahrzeugbusse 18, 18', 18" sind über Slave-Gateways 20, 20', 20" mit dem Zugbus 16 gekoppelt. An den Slave-Fahrzeugbus 18, 18', 18" sind Systemkomponenten 22, 22', 22" beziehungsweise 24, 24', 24" angeschlossen. Die Systemkomponenten 22 und 24 können beispielsweise Antriebseinrichtungen, Bremseinrichtungen oder dergleichen sein. Dies sind in jedem Fall Komponenten, die infolge empfangener Befehle Aktionen ausführen. Dies können auch Komponenten sein, die Informationen über Betriebszustände liefern.

Die Triebfahrzeuge 14, 14' besitzen ferner einen Master-Fahrzeugbus 26, 26', der jeweils über ein Master-Gateway 28, 28' mit dem Zugbus 16 gekoppelt ist. An den Master-Fahrzeugbus 26, 26' sind Systemkomponenten 30, 30', 32, 32' angeschlossen, die aus Vorgaben eines Triebfahrzeugführers oder eines elektronischen Steuersystems Befehle zum Führen des Zuges 10 geben können. Diese Befehle werden während einer Zugfahrt über eines der Master-Gateways 28, 28' in den Zugbus 16 eingespeist und können über die Slave-Gateways 20, 20', 20" von den, entsprechende Steuerbefehle ausführende Systemkomponenten 22, 22', 22" beziehungsweise 24, 24', 24" empfangen werden. Eine derartige Datenkommunikation innerhalb des Zuges 10 über den Zugbus 16 beziehungsweise die Slave-Fahrzeugbusse 18, 18', 18" beziehungsweise einem der Master-Fahrzeugbusse 26 beziehungsweise 26' ist an sich bekannt.

Figur 2 zeigt in einer schematischen Ansicht einen Zug 10 in einer weiteren Konfiguration. Gleiche Teile wie in Figur 1 sind mit gleichen Bezugszeichen versehen und nicht nochmals erläutert. Der Zug 10 gemäß Figur 2 besitzt ein Triebfahrzeug 14 und zwei Wagen 12. Hierbei sind dem Triebfahrzeug 14 die beiden Master-Fahrzeugbusse 26 beziehungsweise 26' zugeordnet. Diese können beispielsweise zwei Leitständen des Triebfahrzeuges 14 zugeordnet sein, oder diese sind aus Redundanzgründen zweifach im Triebfahrzeug 14 vorhanden.

Nach weiteren; nicht dargestellten Ausführungsbeispielen können auch Konfigurationen von Zügen 10 gegeben sein, bei denen mehrere Triebfahrzeuge 14 mit mehreren Master-Fahrzeugbussen 26 gegeben sind. Ferner können die Fahrzeuge 12 beispielsweise auch mehr als einen Slave-Fahrzeugbus 18 umfassen. Eine weitere Möglichkeit besteht darin, daß ein Triebfahrzeug 14 lediglich Master-Fahrzeugbusse 26 aufweist, jedoch kein Slave-Fahrzeugbus 18 vorhanden ist. Unabhängig von all diesen möglichen Konfigurationen des Zuges 10 ist für die Erfindung wichtig, daß der Zug 10 insgesamt wenigstens zwei Master-Fahrzeugbusse 26 beziehungsweise 26' umfaßt.

Eine Initialisierung des Datenkommunikationssystems erfolgt während einer Zugtaufe des Zuges 10. Das heißt, nach Zusammenstellen des Zuges 10 wird über einen der Master-Fahrzeugbusse 26 oder 26' die Zugtaufe durchgeführt, die insbesondere das Erfassen der Anzahl der Fahrzeuge 12, 14, 14', das Initialisieren der an den Slave-Fahrzeugbussen 18, 18', 18" angeschlossenen Systemkomponenten 22 und 24 sowie das Erkennen eines Zugendes umfaßt. Der Ablauf der Initialisierung des Datenkommunikationssystems soll im Rahmen der vorliegenden Beschreibung nicht im einzelnen beschrieben werden, da dies allgemein bekannt ist. Insofern wird nur auf den erfindungsgemäßen Aufbau und die Funktion des Datenkommunikationssystems eingegangen.

Bei der Initialisierung des Datenkommunikationssystems ist sicherzustellen, daß nur einer der Master-Fahrzeugbusse 26 beziehungsweise 26' Befehle in das Datenkommunikationssystem geben kann. Gleichzeitig soll jedoch erfindungsgemäß eine Initialisierung aller weiterer an den Zugbus 16 angeschlossenen Master-Fahrzeugbusse 26 und 26' erfolgen. Hierzu ist vorgesehen, daß die Master-Gateways 28 und 28', über die die Master-Fahrzeugbusse 26 beziehungsweise 26' an den Zugbus gekoppelt sind, einen Betriebszustand "AKTIV" 34 beziehungsweise einen Betriebszustand "PASSIV" 36 annehmen können. Anhand der schematischen Darstellung der Master-Gateways 28, 28' wird dies verdeutlicht.

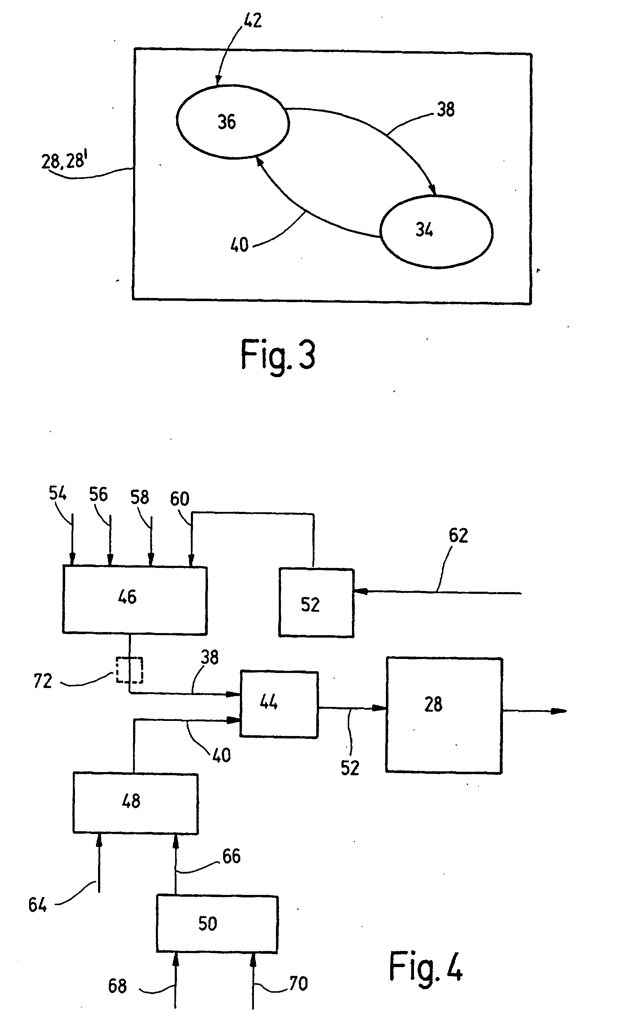

Anhand der in Figur 3 angedeuteten Signale 38 beziehungsweise 40 wird eine Umschaltung jedes Master-Gateways 28 beziehungsweise 28' von dem Zustand "PASSIV" 36 in den Zustand "AKTIV" 34 beziehungsweise umgekehrt möglich. Mit Beginn der Initialisierung des Datenkommunikationssystems wird zunächst mittels eines Ausgangssignals 42 erreicht, daß alle Master-Gateways 28, 28' in den Zustand "PASSIV" 36 geschaltet sind.

Der Betriebszustand "PASSIV" 36 der Master-Gateways 28, 28' bedeutet, daß nur eine unidirektionale Datenkommunikation vom Zugbus 16 zu dem Master-Fahrzeugbus 26 beziehungsweise 26' möglich ist. Durch die an den Master-Fahrzeugbussen 26 beziehungsweise 26' angeschlossenen Systemkomponenten 30 beziehungsweise 32 können somit keine Aktionen innerhalb des Zuges 10 ausgelöst werden, während jedoch gleichzeitig Informationen aufgrund der unidirektionalen Datenkommunikation von den Systemkomponenten 30 beziehungsweise 32 empfangen werden können. Beim Betriebszustand "AKTIV" 34 ist hingegen eine bidirektionale Datenkommunikation zwischen dem Zugbus 16 und den Master-Fahrzeugbussen 26 beziehungsweise 26' möglich. Somit können neben dem Empfang von Daten auch Befehle von den Systemkomponenten 30 beziehungsweise 32 in den Zugbus 16 gesendet werden.

Anhand der Darstellung des Blockschaltbildes in Figur 4 wird die Umschaltung der Master-Gateways 28, 28' vom Betriebszustand "PASSIV" 36 in den Betriebszustand "AKTIV" 34 beziehungsweise umgekehrt näher erläutert. Nachfolgend werden der Aufbau und die Funktion anhand des Master-Gateways 28 erläutert.

Das Master-Gateway 28 umfaßt - neben weiteren, hier nicht näher zu erläuternden Schaltungsbestandteilen - einen Flip-Flop 44, ein erstes UND-Glied 46, ein zweites UND-Glied 48, ein ODER-Glied 50 sowie eine Auswerteeinheit 52. An den Eingängen des Flip-Flops 44 liegen die Signale 38 und 40 an, die die Umschaltung des Master-Gateways 28 in den Betriebszustand "PASSIV" 36 beziehungsweise den Betriebszustand "AKTIV" 34 bewirken. Ein Ausgangssignal 52 des Flip-Flops 44 repräsentiert dessen Schaltzustand. Entsprechend der bistabilen Eigenschaften des Flip-Flops 44 liefert das Ausgangssignal 52 entweder einen Wert "Wahr", der den Betriebszustand "AKTIV" 34 des Master-Gateways 28 zur Folge hat oder einen Wert "Falsch", der den Betriebszustand "PASSIV" 36 zur Folge hat. Das Triggern des Flip-Flops 44 zwischen diesen zwei möglichen Schaltzuständen wird durch die Signale 38 beziehungsweise 40 gesteuert.

Das Signal 38 ist das Ausgangssignal des UND-Gliedes 46. An vier Eingängen des UND-Gliedes 46 liegen Signale 54, 56, 58 beziehungsweise 60 an. Die Signale 54, 56 und 58 werden von nicht näher dargestellten Sensoren beziehungsweise Schaltungen geliefert, wobei das Signal 54 die Information trägt, daß der Zug 10 steht, das Signal 56 die Information trägt, daß ein Schlüsselschalter (Startschalter, Initialisierungsschalter oder dergleichen) eingeschaltet ist und das Signal 58 die Information trägt, daß eine Systemkomponente 30, 32 eine Initialisierung des Datenkommunikationssystems des Zuges 10 einleiten will. Das Signal 60 wird von der Auswerteeinheit 52 geliefert, das in Abhängigkeit eines Eingangssignals 62 die Information trägt, daß innerhalb des Zuges 10 kein weiteres Master-Gateway 28' AKTIV geschaltet ist. Das Ausgangssignal 38 des UND-Gliedes 46 liegt erst an, wenn alle Eingangssignale 54, 56, 58 und 60 vorhanden sind. Somit wird sichergestellt, daß bei einem, im Zug 10 aktiven Master-Gateway 28 eine Aktivierung eines weiteren Master-Gateways 28' und somit eines weiteren Master-Fahrzeugbusses 26 nicht möglich ist. Ist innerhalb des Zuges 10 einer der vorhandenen Master-Gateways 28, 28' aktiv, liegt das Eingangssignal 62 an der Auswerteeinheit 52 an, so daß das Eingangssignal 60 für das UND-Glied 46 nicht generiert ist. Somit wird eindeutig geregelt, daß immer genau ein Master-Gateway 28, 28' innerhalb eines Zuges 10 aktiv geschaltet ist, während alle weiteren Master-Fahrzeugbusse 26 durch den Betriebszustand "PASSIV" 36 ihrer Master-Gateways 28 lediglich die bereits erläuterte unidirektionale Datenkommunikation vom Zugbus 16 jedoch nicht in den Zugbus 16 gestatten.

Das Umschalten eines Master-Gateways 28 vom Betriebszustand "AKTIV" 34 in den Betriebszustand "PASSIV" 36 erfolgt durch das Signal 40. Dieses ist das Ausgangssignal des UND-Gliedes 48, an dessen zwei Eingängen einerseits ein Signal 64 und andererseits ein Signal 66 anliegt. Das Signal 64 trägt die Information, daß der Zug 10 steht. Das Signal 64 entspricht somit dem Signal 54 am Eingang des UND-Gliedes 46. Das Signal 66 ist ein Ausgangssignal des ODER-Gliedes 50, an dessen Eingängen einerseits ein Signal 68 und andererseits ein Signal 70 anliegt. Das Signal 68 trägt die Information, daß der Schlüsselschalter (Startschalter, Initialisierungsschalter oder dergleichen) ausgeschaltet ist, während das Signal 70 die Information trägt, daß ein Deaktivierungsschalter betätigt ist. Somit wird das Master-Gateway 28 in den Betriebszustand "PASSIV" 36 geschaltet, wenn der Zug 10 steht (Signal 64) und wenn ein Schlüsselschalter ausgeschaltet ist (Signal 68) oder ein Deaktivierungsschalter eingeschaltet ist (Signal 70).

Anhand der logischen Verknüpfungen der einzelnen Signale wird deutlich, daß immer nur ein Master-Gateway 28 den Betriebszustand "AKTIV" 34 annehmen kann. Dies ist das Master-Gateway 28, über dessen Master-Fahrzeugbus 26 von einem der Systemkomponenten 30, 32 das Signal 58 geliefert wird, daß eine Initialisierung des Datenkommunikationssystems des Zuges 10 erfolgen soll. Ist innerhalb des Zugverbundes 10 bereits ein Master-Gateway 28 im Betriebszustand "AKTIV" 34 geschaltet, muß dieses zuvor durch das Signal 68 oder 70 in den Betriebszustand "PASSIV" 36 gebracht werden. Somit wird sicher ausgeschlossen, daß gleichzeitig zwei Master-Gateways 28 innerhalb eines Zuges 10 den Betriebszustand "AKTIV" 34 annehmen können.

Während einer erstmaligen Initialisierung des Datenkommunikationssystems eines Zuges 10 erfolgt die Zugtaufe über die an das aktive Master-Gateway 28 geschalteten Systemkomponenten 30 beziehungsweise 32. Während dieser Initialisierung werden alle Slave-Gateways 20, 20', 20" erfaßt, während alle weiteren im Zug 10 vorhandenen Master-Gateways 28, 28', nicht berücksichtigt werden. Diese besitzen alle eine gleiche feste Adresse, beispielsweise die Adresse 0. Hierdurch wird erreicht, daß während der Initialisierung des Datenkommunikationssystems die von den Slave-Gateways 20, 20', 20" gelieferten Informationen neben dem aktiven Fahrzeugmaster-Gateway 28, 28' auch von dem passiven Master-Gateway 28' gelesen werden können. Dies ist möglich, da während des Betriebszustandes "PASSIV" 36 eine unidirektionale Datenkommunikation vom Zugbus 10 über das passive Master-Gateway 28' möglich ist. Hiermit wird erreicht, daß nach erfolgter Initialisierung (Zugtaufe) des Datenkommunikationssystems sämtliche Systemkomponenten, die an einen Master-Fahrzeugbus 26, 26' angeschlossen sind, auch wenn deren Master-Gateway 28, 28' passiv geschaltet ist, über alle notwendigen Informationen des Zuges 10 verfügen. Dies ist eine Voraussetzung, daß von jedem der zunächst passiv geschalteten Master-Fahrzeugbusse 26 sofort eine Master-Funktion übernommen werden kann, ohne daß eine erneute Initialisierung (Zugtaufe) des Datenkommunikationssystems erfolgen muß.

Eine Übergabe der Master-Funktion von einem Master-Fahrzeugbus 26 auf einen weiteren Master-Fahrzeugbus 26' beziehungsweise die an diesen angeschlossenen Systemkomponenten 30 und 32 beziehungsweise 30' und 32' erfolgt derart, daß durch einen Triebfahrzeugführer auf dem gerade aktiv geschalteten Master-Fahrzeugbus 26 ein Signal an alle weiteren, gerade passiv geschalteten Master-Fahrzeugbusse 26' gesendet wird. Somit sind sämtliche Master-Fahrzeugbusse 26 des Zuges 10 darüber informiert, daß eine Übergabe einer Master-Funktion erfolgen soll. Hierdurch können die passiven Master-Fahrzeugbusse 26 infolge ihrer unidirektionalen Verbindung mit dem Zugbus 16 alle im Moment aktuellen Initialisierungs- und Konfigurationsinformationen des Zuges 10 nochmals abspeichern. Nachfolgend wird am noch aktiven Master-Fahrzeugbus 26 das Signal 70 ausgelöst, so daß eine Umschaltung des aktiven Master-Gateways 28 in den Betriebszustand "PASSIV" 36 erfolgt. Somit ist im Moment im gesamten Zug 10 keiner der vorhandenen Master-Gateways 28, 28' aktiv geschaltet. Das Signal 62, das an jedem Master-Gateway 28 anliegt, liefert somit die Information, daß innerhalb des Zuges 10 kein weiteres Master-Gateway 28 aktiv ist und somit bei weiterem Anliegen der Signale 54, 56 und 58 am UND-Glied 46 die Aktivierung eines der weiteren vorhandenen Master-Gateways 28, 28' erfolgen kann. Durch Auslösen des Signals 58 an dem dann aktiv zu schaltenden Master-Fahrzeugbus 26 wird das entsprechende Master-Gateway 28, 28' nach dem bereits erläuterten Verfahren in den Betriebszustand "AKTIV" 34 geschaltet, so daß wiederum genau ein Master-Fahrzeugbus 26, 26' des Zuges 10 die Masterfunktion übernehmen kann, während alle weiteren Master-Fahrzeugbusse 26, 26' des Zuges 10 passiv sind. Da die Initialisierungs- und Konfigurationsinformationen dem dann aktiv geschalteten Master-Fahrzeugbus 26, 26' bereits vorliegen, ist eine erneute Initialisierung (Zugtaufe) nicht erforderlich.

Beim Wechseln der Masterfunktion innerhalb eines Zuges 10 zwischen verschiedenen Master-Fahrzeugbussen 26, 26' kann vorgesehen sein, daß zusätzlich eine Zeitkomponente eingebaut wird, indem innerhalb der Master-Gateways 28, 28' ein Zeitglied 72, in Figur 3 gestrichelt angedeutet, zwischen dem UND-Glied 46 und dem Flip-Flop 44 geschaltet ist, über das das Signal 38 geführt wird. Hierdurch kann erreicht werden, daß eine Übergabe der Master-Funktion nur innerhalb einer vorgebbaren Zeitspanne möglich ist, da andernfalls über das Zeitglied 72 der Verbindungsweg zwischen dem UND-Glied 46 und dem Flip-Flop 44 unterbrechbar ist, so daß ein Signal 38 zum Umschalten des Master-Gateways 28 in den Betriebszustand "AKTIV" 34 nicht am Flip-Flop 44 anliegen kann. Hierdurch wird sichergestellt, daß eine Übergabe der Master-Funktion innerhalb dieser Zeitspanne erfolgen muß. Die durch das Zeitglied 72 vorgebbare Zeitspanne kann beispielsweise im Minutenbereich, zum Beispiel 5 und 15 min., liegen.

## Patentansprüche

1. Datenkommunikationssystem im Zug, mit einem Zugbus zur Kommunikation zwischen Fahrzeugen des Zuges und mit jedem Fahrzeug zugeordneten internen Fahrzeugbussen, die über jeweils ein Gateway an den Zugbus angekoppelt sind, wobei innerhalb des Zuges wenigstens zwei Master-Fahrzeugbusse vorhanden sind, wobei einer der Master-Fahrzeugbusse bei einer Initialisierung des Datenkommunikationssystems als aktiver Master schaltbar ist und alle Steuerfunktionen des Zuges übernimmt, **dadurch gekennzeichnet, daß** bei der Initialisierung des Datenkommunikationssystems alle Master-Gateways (28, 28') der Master-Fahrzeugbusse (26, 26') die gleiche Adresse aufweisen aber zwei unterschiedliche Betriebszustände annehmen können, wobei genau ein Master-Gateway (28, 28') eines Master-Fahrzeugbusses (26, 26') einen Betriebszustand "AKTIV" (34) und alle weiteren Master-Gateways (28, 28') der weiteren Master-Fahrzeugbusse (26, 26') einen Betriebszustand "PASSIV" (36) annehmen.

2. Datenkommunikationssystem nach Anspruch 1, **dadurch gekennzeichnet, daß** die Master-Gateways (28, 28') eine Schaltungsanordnung besitzen, mittels der Signale (38, 40) generierbar sind, die eine Umschaltung der Betriebszustände "AKTIV" (34) oder "PASSIV" (36) auslösen.

3. Datenkommunikationssystem nach einem der vorhergehenden Ansprüche, **dadurch gekennzeichnet, daß** die Master-Gateways (28, 28') ein erstes UND-Glied (46) besitzen, an dessen Ausgang das Signal (38) zur Umschaltung in den Betriebszustand "AKTIV" (34) anliegt.

4. Datenkommunikationssystem nach einem der vorhergehenden Ansprüche, **dadurch gekennzeichnet, daß** die Master-Gateways (28, 28') ein zweites UND-Glied (48) besitzen, an dessen Ausgang das Signal (40) zur Umschaltung in den Betriebszustand "PASSIV" (36) anliegt.

5. Datenkommunikationssystem nach einem der vorhergehenden Ansprüche, **dadurch gekennzeichnet, daß** die Signale (38, 40) an Eingängen eines Flip-Flops (44) anliegen, dessen Ausgangssignal (52) die Umschaltung der Master-Gateways (28, 28') vom Betriebszustand "AKTIV" (34) in den Betriebszustand "PASSIV" (36) oder umgekehrt auslöst.

6. Datenkommunikationssystem nach Anspruch 3, **dadurch gekennzeichnet, daß** das UND-Glied (46) vier Eingänge aufweist, an die ein Signal (54) anliegt, das die Information trägt, daß der Zug (10) steht, ein Signal (56) anliegt, daß die Information trägt, daß ein Initialisierungsschalter innerhalb eines zu aktivierenden Master-Fahrzeugbusses (26, 26') eingeschaltet ist, ein Signal (58) anliegt, das die Information trägt, daß eine Initialisierung des Datenkommunikationssystems des Zuges (10) gestartet werden soll, und ein Signal (60) anliegt, das die Information trägt, daß im Zug (10) kein weiteres Master-Gateway (28, 28') "AKTIV" geschaltet ist.

7. Datenkommunikationssystem nach Anspruch 6, **dadurch gekennzeichnet, daß** das Signal (60) von einer Auswerteeinheit (52) geliefert wird, an deren Eingang ein Signal (62) anliegt, das von allen weiteren Master-Gateways (28, 28') des Zuges (10) bereitgestellt wird.

8. Datenkommunikationssystem nach Anspruch 4, **dadurch gekennzeichnet, daß** das UND-Glied (48) zwei Eingänge aufweist, an die ein Signal (64) anliegt, das die Information trägt, daß der Zug (10) steht und ein Signal (66) anliegt, das die Information trägt, daß eine Deaktivierung des aktiven Master-Gateways (28, 28') erfolgen soll.

9. Datenkommunikationssystem nach Anspruch 8, **dadurch gekennzeichnet, daß** das Signal (66) das Ausgangssignal eines ODER-Gliedes (50) ist, an dessen Eingängen ein Signal (68) anliegt, das die Information trägt, daß der Initialisierungsschalter innerhalb des gerade aktiven Master-Fahrzeugbussystems (26, 26') ausgeschaltet ist und ein Signal (70) anliegt, das die Information trägt, daß eine Deaktivierung des aktiven Master-Gateways (28, 28') erfolgen soll.

10. Datenkommunikationssystem nach einem der vorhergehenden Ansprüche, **dadurch gekennzeichnet, daß** alle Master-Gateways (28, 28') des Zuges eine gleiche feste Adresse besitzen.

11. Datenkommunikationssystem nach einem der vorhergehenden Ansprüche, **dadurch gekennzeichnet, daß** zwischen dem UND-Glied (46) und dem Flip-Flop (44) ein Zeitglied (72) geschaltet ist, über das das Signal (38) geführt wird.

12. Datenkommunikationssystem nach einem der vorhergehenden Ansprüche, **dadurch gekennzeichnet, daß** die wenigstens zwei Master-Fahrzeugbusse (26, 26') in einem Fahrzeug (14) des Zuges (10) angeordnet sind.

13. Datenkommunikationssystem nach einem der Ansprüche 1-11, **dadurch gekennzeichnet, daß** die wenigstens zwei Master-Fahrzeugbusse (26, 26') in mehreren Fahrzeugen (14, 14') des Zuges (10) angeordnet sind.

## Claims

1. A data communication system in the train, comprising a train bus for communication between vehicles of the train and comprising internal vehicle buses allocated to each vehicle which are each coupled to the train bus via respectively one gateway, wherein at least two master vehicle buses are present inside the trains, wherein one of the master vehicle buses can be switched as active master during an initialisation of the data communication system and takes over all control functions of the train, **characterised in that** during the initialisation of the data communication system all master gateways (28, 28') of the master vehicle buses (26, 26') have the same addresses but can assume two different operating states, wherein precisely one master gateway (28, 28') of a master vehicle bus (26, 26') assumes an "ACTIVE" operating state (34) and all the other master gateways (28, 28') of the other master vehicle buses (26, 26') assume a "PASSIVE" operating state (36).

2. The data communication system according to claim 1, **characterised in that** the master gateways (28, 28') have a circuit arrangement by which means signals (38, 40) can be generated which trigger a switchover of the operating states "ACTIVE" (34) or "PASSIVE" (36).

3. The data communication system according to any one of the preceding claims, **characterised in that** the master gateways (28, 28') have a first AND gate (46) to whose output the signal (38) for switching over to the "ACTIVE" operating state (34) is applied.

4. The data communication system according to any one of the preceding claims, **characterised in that** the master gateways (28, 28') have a second AND gate (48) to whose output the signal (40) for switching over to the "PASSIVE" operating state (36) is applied.

5. The data communication system according to any one of the preceding claims, **characterised in that** the signals (38, 40) are applied to inputs of a flip-flop (44) whose output signal (52) triggers the switchover of the master gateway (28, 28') from the "ACTIVE" operating state (34) to the "PASSIVE" operating state (36) or conversely.

6. The data communication system according to claim 3, **characterised in that** the AND gate (46) has four inputs to which are a applied a signal (54) carrying the information that the train (10) is standing, a signal (56) carrying the information that an initialising switch inside a master vehicle bus (26, 26') to be activated, is switched on, a signal (58) carrying the information that an initialisation of the data communication system of the train (10) should be started and a signal (60) carrying the information that no other master gateway (28, 28') is switched to "ACTIVE" II in the train (10).

7. The data communication system according to claim 6, **characterised in that** the signal (60) is supplied from an evaluation unit (52) to whose input a signal (62) is applied which is prepared by all the other master gateways (28, 28') of the train (10).

8. The data communication system according to claim 4, **characterised in that** the AND gate (48) has two inputs to which are applied a signal (64) carrying information that the train (10) is standing and a signal (66) carrying the information that the active master gateway (28, 28') should be deactivated.

9. The data communication system according to claim 8, **characterised in that** the signal (66) is the output signal of an OR gate (50) to whose inputs are applied a signal (68) carrying the information that the initialising switch inside the just active master vehicle bus system (26, 26') is switched off and a signal (70) carrying the information that the active master gateway (28, 28') should be deactivated.

10. The data communication system according to any one of the preceding claims, **characterised in that** all the master gateways (28, 28') of the train have the same fixed address.

11. The data communication system according to any one of the preceding claims, **characterised in that** there is a time gate (72) switched between the AND gate(46) and the flip flop (44), via which the signal (38) is passed.

12. The data communication system according to any one of the preceding claims, **characterised in that** the at least two master vehicle buses (26, 26') are arranged in one vehicle (14) of the train (10).

13. The data communication system according to any one of the claims 1-11, **characterised in that** the at least two master vehicle buses (26, 26') are arranged in a plurality of vehicles (14, 14') of the train (10).

## Revendications

1. Système de communication de données dans le train, comprenant un bus de train pour la communication entre des véhicules du train et des bus de véhicules internes associés à chaque véhicule, qui sont couplés respectivement par une passerelle au bus de train, au moins deux bus de véhicules maîtres étant disponibles à l'intérieur du train, un des bus de véhicules maîtres étant activable en tant que maître actif lors d'une initialisation du système de communication de données et assurant toutes les fonctions de commande du train, **caractérisé en ce que**, lors de l'initialisation du système de communication de données, toutes les passerelles maîtresses (28, 28') des bus de véhicules maîtres (26, 26') présentent la même adresse mais peuvent prendre deux états de fonctionnement différents, juste une passerelle maîtresse (28, 28') d'un bus de véhicule maître (26, 26') prenant un état de fonctionnement « ACTIF » (34) et toutes les autres passerelles maîtresses (28, 28') des autres bus de véhicules maîtres (26, 26') prenant un état de fonctionnement « PASSIF » (36).

2. Système de communication de données selon la revendication 1, **caractérisé en ce que** les passerelles maîtresses (28, 28') possèdent un arrangement de circuits au moyen duquel peuvent être générés des signaux (38, 40) qui déclenchent une commutation des états de fonctionnement « ACTIF » (34) ou « PASSIF » (36).

3. Système de communication de données selon l'une quelconque des revendications précédentes, **caractérisé en ce que** les passerelles maîtresses (28, 28') possèdent un premier élément ET (46) à la sortie duquel est appliqué le signal (38) de commutation vers l'état de fonctionnement « ACTIF » (34).

4. Système de communication de données selon l'une quelconque des revendications précédentes, **caractérisé en ce que** les passerelles maîtresses (28, 28') possèdent un deuxième élément ET (48) à sortie duquel est appliqué le signal (40) de commutation vers l'état de fonctionnement « PASSIF » (36).

5. Système de communication de données selon l'une quelconque des revendications précédentes, **caractérisé en ce que** les signaux (38, 40) sont appliqués aux entrées d'une bascule (44) dont le signal de sortie (52) déclenche la commutation des passerelles maîtresses (28, 28') de l'état de fonctionnement « ACTIF » (34) vers l'état de fonctionnement « PASSIF » (36) ou vice versa.

6. Système de communication de données selon la revendication 3, **caractérisé en ce que** l'élément ET (46) présente quatre entrées auxquelles est appliqué un signal (54) qui contient l'information spécifiant que le train (10) est l'arrêt, auquel est appliqué un signal (56) qui contient l'information spécifiant qu'un interrupteur d'initialisation est activé à l'intérieur d'un bus de véhicule maître à activer (26, 26'), auquel est appliqué un signal (58) qui contient l'information spécifiant qu'une initialisation du système de communication de données du train (10) doit être lancée, et auquel est appliqué un signal (60) qui contient l'information spécifiant qu'aucune autre passerelle maîtresse (28, 28') n'est activée en « ACTIF » dans le train (10).

7. Système de communication de données selon la revendication 6, **caractérisé en ce que** le signal (60) est envoyé par une unité d'exploitation (52) à l'entrée de laquelle est appliqué un signal (62) qui est fourni par toutes les autres passerelles maîtresses (28, 28') du train (10).

8. Système de communication de données selon la revendication 4, **caractérisé en ce que** l'élément ET (48) présente deux entrées auxquelles est appliqué un signal (64) qui contient l'information spécifiant que le train (10) est à l'arrêt et est appliqué un signal (66) qui contient l'information spécifiant qu'il faut procéder à une désactivation de la passerelle maîtresse active (28, 28').

9. Système de communication de données selon la revendication 8, **caractérisé en ce que** le signal (66) est le signal de sortie d'un élément OU (50) aux entrées duquel est appliqué un signal (68) qui contient l'information spécifiant que l'interrupteur d'initialisation est désactivé à l'intérieur du système de bus de véhicule maître (26, 26') actif à ce moment-là et où est appliqué un signal (70) qui contient l'information spécifiant qu'il faut procéder à une désactivation de la passerelle maîtresse active (28, 28').

10. Système de communication de données selon l'une quelconque des revendications précédentes, **caractérisé en ce que** toutes les passerelles maîtresses (28, 28') du train possèdent une même adresse fixe.

11. Système de communication de données selon l'une quelconque des revendications précédentes, **caractérisé en ce qu'**entre l'élément ET (46) et la bascule (44) est branché un temporisateur grâce auquel le signal (38) est guidé.

12. Système de communication de données selon l'une quelconque des revendications précédentes, **caractérisé en ce que** les aux moins deux bus de véhicules maîtres (26, 26') sont disposés dans un véhicule (14) du train (10).

13. Système de communication de données selon l'une des revendications 1 à 11, **caractérisé en ce que** les au moins deux bus de véhicules maîtres (26, 26') sont disposés dans plusieurs véhicules (14, 14') du train (10).
